# EUROPEAN PATENT SPECIFICATION

(11) **EP 0 542 342 B1**
(45) Date of publication and mention of the grant of the patent: **31.01.1996**
(21) Application number: 92203373.3
(22) Date of filing: 04.11.1992
(51) Int. Cl.: F16L 37/34, F16L 37/40

(54) **Female fitting for various fluids**
Weibliche Verbindung für verschiedene Flüssigkeiten
Raccord femelle pour fluides divers

(30) Priority: 11.11.1991 IT MI912996
(43) Date of publication of application: 19.05.1993
(73) Proprietor: STUCCHI S.r.l., I-24053 Brignano Gera d'Adda (Bergamo) (IT)
(72) Inventor: Stucchi, Giovanni, I-24047 Treviglio, Bergamo (IT)
(74) Representative: Mittler, Enrico

(56) References cited:
- US-A- 3 097 867
- US-A- 3 171 448
- US-A- 3 201 151
- US-A- 5 123 446

## Description

The present invention relates to a female fitting for various fluids.

In the hydraulic sector, in particular in the case of advanced technology installations, the need is known of having available quick-action male and female fittings for connecting two utilities by means of flexible hoses.

According to a currently known technique the female fitting is accomplished by means of a structure constituted by an internal housing that extends in an internally-threaded end nut for connecting toward the utility and by an external housing coaxial with said internal housing.

The internal housing supports an internal axial stem, concentrically with which there is a sealing bush that is elastically urged in a position of sealing engagement with an enlarged extremity of the stem, so as to prevent the flow of the fluid until it is disengaged as a result of the coupling of the female fitting with a corresponding male fitting.

Concentrically with and externally to the bush, there is a unit for cleaning the same formed by a cup with a corresponding positioning spring.

Integral with the internal housing, between the same and a rearward portion of the axial stem, there is a spoked annular element with six small-diameter holes for the flow of the fluid.

The male fitting, in a manner known in itself, consists in turn of an internal piston with its positioning spring and of a external housing.

During the coupling between the female fitting and the male fitting, the cup of the female fitting is driven by the external housing of the male fitting and during its translation it leads the bush along with it against the action of the positioning spring corresponding to it. At the same time the piston of the male fitting is urged to return inside the external housing of the same fitting against the action of the corresponding positioning spring.

There is also in the female fitting a safe-clamping system that consists of a slidable and rotatable sleeve and of balls for clamping the male fitting with respect to the female fitting and the sleeve itself in the clamped position, respectively.

A problem of this type of female fitting consists in the fact that the presence of a spoked element with six small-diameter holes constitutes an obstacle to the flow of the fluid with the consequent introduction of turbulences.

US-A-3171448 discloses a pipe fitting according to the preamble of claim 1.

The object of the present invention is to overcome the abovementioned drawbacks by providing a female fitting of the abovementioned type, that is modified so as to reduce to a minimum the turbulence of the fluid in flowing through the holes of the spoked element and to allow prompt substitution of the spoked element.

According to the invention such object is attained with a female fitting as defined in claim 1.

It appears evident that the manufacture of the spoked element with at least two ports, preferably three, having a large size, with respect to the six holes of the spoked element according to the known art, allows the reduction to a minimum of the obstacle to the flow of the fluid and thus the turbulences created in the fluid itself.

In view of the substantial stresses to which the spoked element is subjected, it is appropriate to use for its manufacture a metal having a higher resistance and thus a greater cost, while the other pieces of which the fitting consists can conveniently be made in a more inexpensive material.

For that reason, unlike in the known art, the spoked element, the internal housing and the end nut are preferably made in three separate pieces made so that the spoked element is clamped in position between the internal housing and the end nut.

This, as already said, allows the manufacture of the spoked element in a more resistant material, albeit more expensive than that of the other two pieces.

It is thus also possible to replace the end nut with another of different sizes for the easy and fast adaptation of the fitting to the particular utility.

The features of the present invention shall be made more evident by the following detailed description of its embodiments illustrated as non-limiting examples in the enclosed drawings, wherein:
Fig. 1 is a longitudinal cross-sectional view of a female fitting, in the position at rest, according to an embodiment of the present invention;
Fig.2 is a longitudinal cross-sectional view of a male fitting, in the position at rest, suitable for coupling with the female fitting of Fig. 1;
Fig. 3 is a longitudinal cross-sectional view of the female fitting illustrated in Fig. 1 during the step of coupling with the male fitting illustrated in Fig. 2;
Fig. 4 is a longitudinal cross-sectional view of the female fitting illustrated in Fig. 1 coupled to and clamped with the male fitting illustrated in Fig. 2;
Fig. 5 shows an enlarged detail of the female fitting of Fig. 1 in a longitudinal cross-sectional view;
Fig. 6 is a transversal cross-sectional view of the same detail taken along the line VI-VI of Fig. 5;
Fig. 7 shows in a longitudinal cross-sectional view a variant of the detail of Fig. 5.

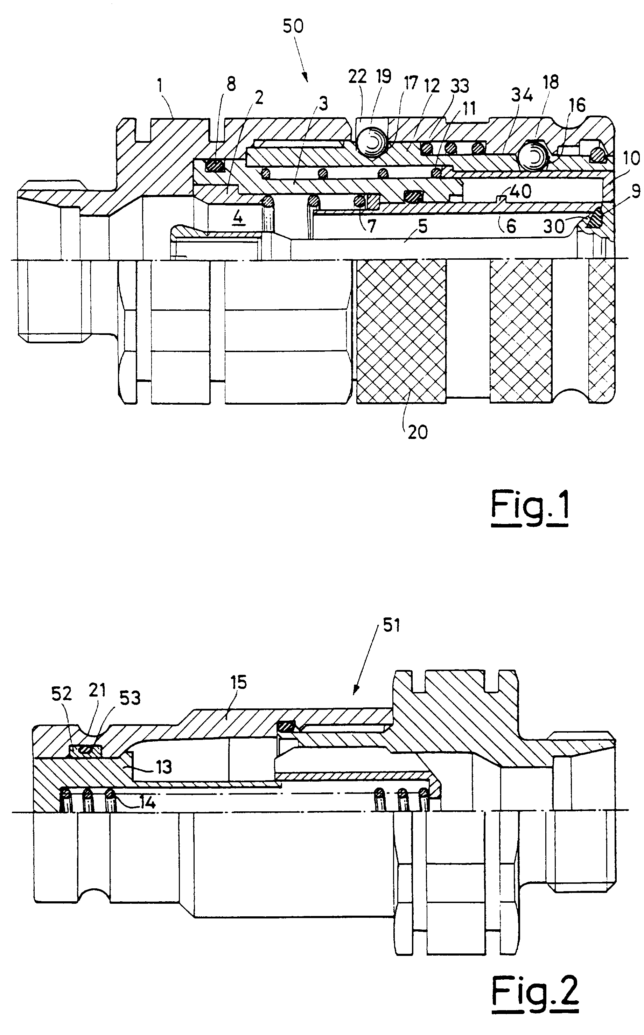

With reference to figures 1, 5, 6, a female fitting 50 comprises, rigidly clamped one to the other, an internally-threaded end nut 1 for connecting toward the utility, an external housing 12 on which the nut 1 is screwed down, an internal housing 3 arranged coaxially in the external housing 12 and an annular element 2 with three spokes 35 and three ports 4 for the flow of the fluid, having substantially the shape of an annular sector and arranged along a circumference of the annular element 2. An annular seal 8 is interposed between the internal housing 3 and the nut 1.

The annular element 2 supports an internal axial stem 5. Concentrically with the stem 5 there is a sealing bush 6 urged by a spring 7 in the position at rest and in engagement with an enlarged extremity 30, that is illustrated in Fig. 1.

With the abovementioned enlarged extremity 30 of the stem 5 there is associated a seal 9 whose object is to prevent the flow of the fluid when the female fitting is at rest.

Concentrically with and externally to the bush 6 and inside the external housing 12, there is a unit for cleaning the bush itself, formed by a cup 10 with a corresponding positioning spring 11 that urges it in the at rest position illustrated in Fig. 1.

In the external housing 12 there are obtained seats 16, 17, for a plurality of balls 18 and for a single ball 19, respectively.

Round the external housing 12 there is a rotatable and axially-translatable sleeve 20, that is used for clamping the female fitting on a correspnding male fitting. In the sleeve 20 there is a notch 22 normally in engagement with the ball 19, that prevents its rotation. The balls 18 normally keep the sleeve 20 in the axial position at rest of Fig. 1 against the action of a spring 33.

With reference to Fig. 2, a male fitting 51 that can be coupled with the female fitting 50 just described consists of an internal piston 13 with a corresponding positioning spring 14 that urges it in the at rest position illustrated in Fig. 2. The male coupling also comprises an external housing 15 in which there is obtained a semicircular seat 21 for the purpose that shall be explained later. Between the piston 13 and the external housing 15 there is interposed an annular teflon seal 52 provided with an O-ring 53.

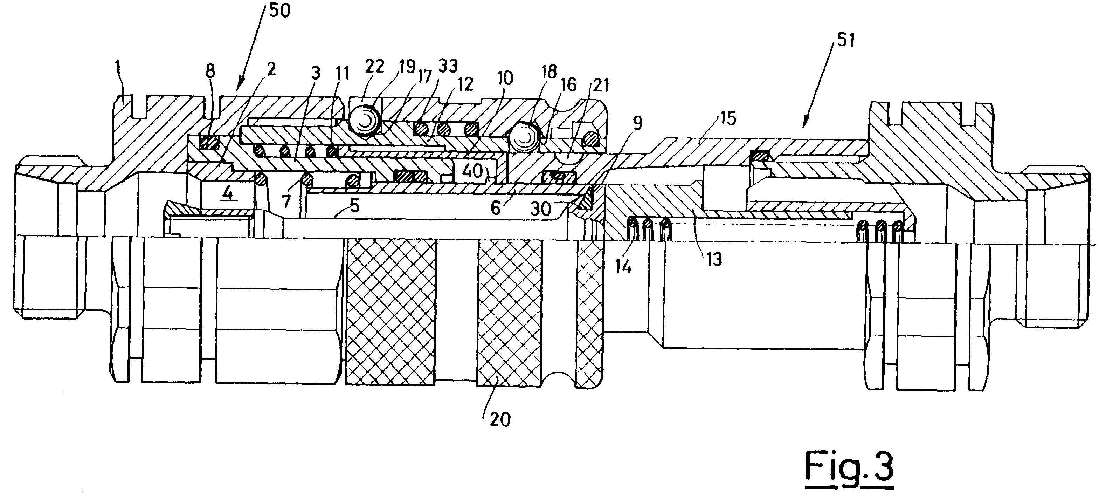

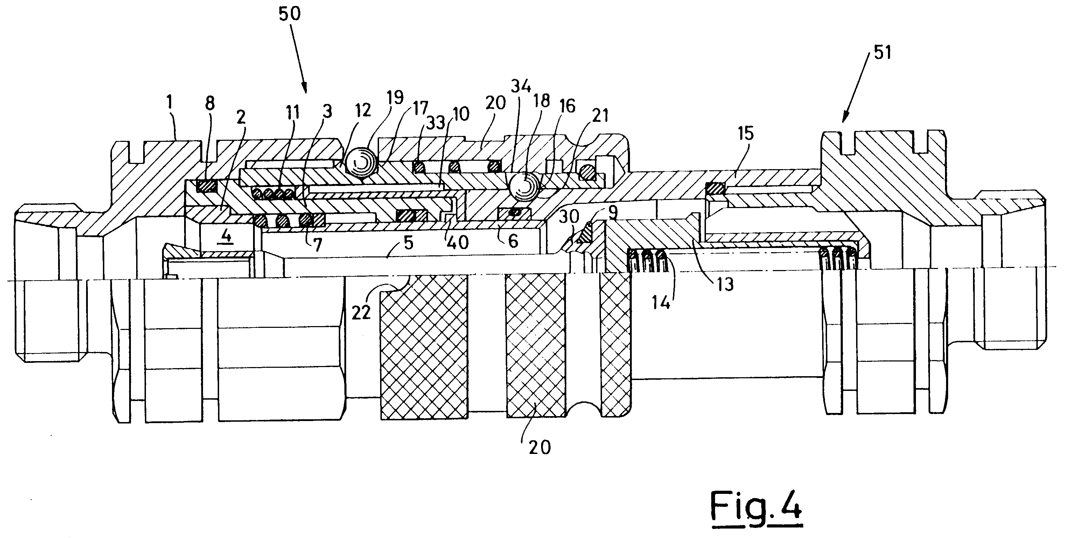

Starting with the at rest position the two fittings, illustrated in Fig.s 1 and 2, during their reciprocal coupling the cup 10 of the female fitting is driven by the external housing 15 of the male fitting to move backward with respect to the external housing 12 and to the bush 6 of the female fitting until it meets a protruding tooth 40 of the bush itself (Fig. 3). This also, from this moment on, is urged to move backward against the action of the positioning spring 7, thus causing the opening of a passage for fluids between the bush 6 and the stem 5 (Fig. 4).

At the same time the piston 13 of the male fitting is urged to move back into the external housing 15 of the male fitting against the action of the corresponding spring 14 to the position illustrated in Fig. 4 with the consequent opening of a passage for fluids between the external housing 15 and the piston 13.

Continuining in its translation, the external housing 15 of the male fitting positions itself with its semicircular seat 21 under the balls 18 and causes their partial insertion inside it (Fig. 4). The sleeve 20 is then made to translate axially by the spring 33 until it moves an annular portion of it 34 is taken to a clamping engagement with the balls 18.

At this point the male and female fittings are coupled and clamped together.

To make such clamping safer in the event of possible sliding displacements imposed upon the sleeve 20, the latter is rotated through 90° (Fig. 4) so that the ball 19 acts as an abutment against the end edge of the sleeve 20 to prevent its possible translation.

This guarantees that the fittings are held in a coupled position.

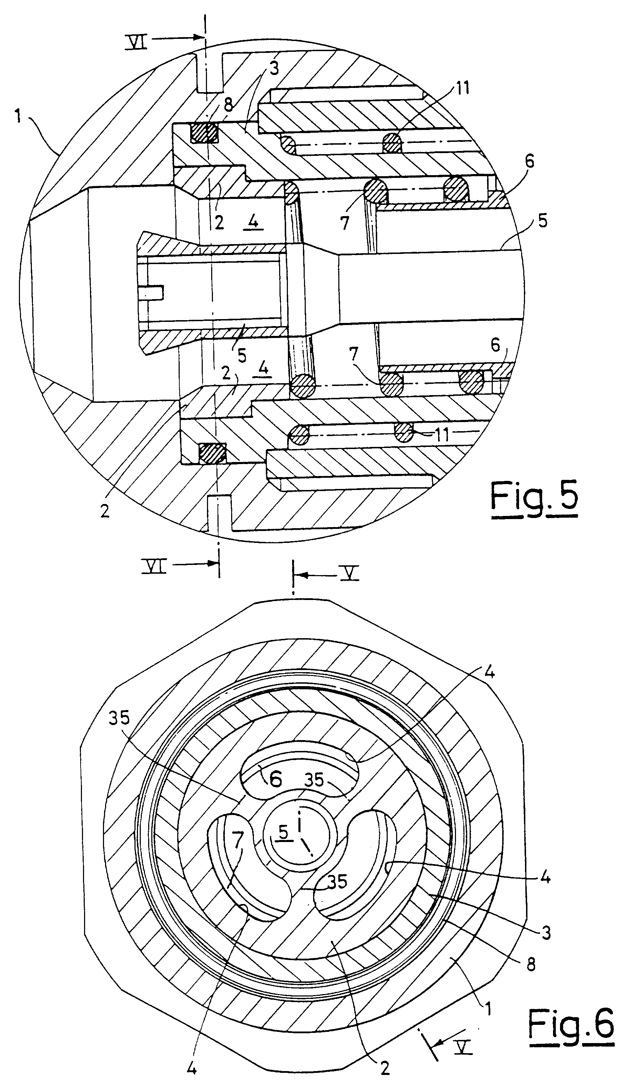

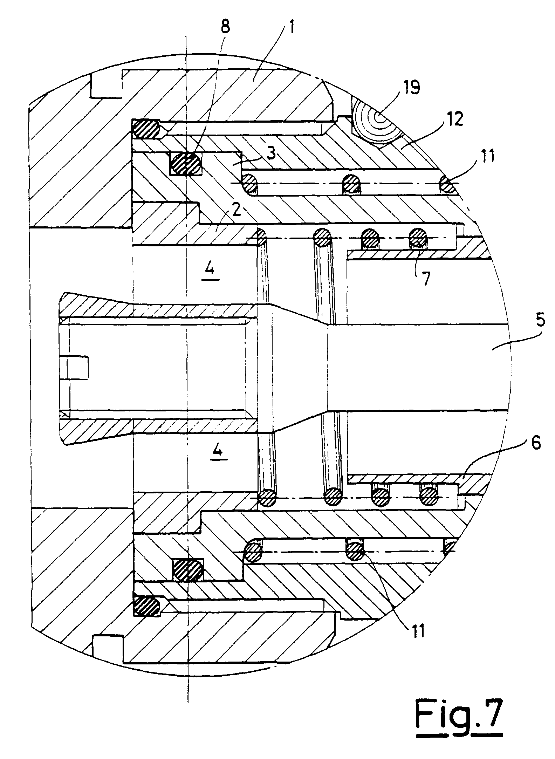

An alternative embodiment of the invention is illustrated in Fig. 7. It differs from the embodiment of Fig. 5 in that the external housing 12 extends lengthwise until it is interposed between the nut 1 and the internal housing 3. Evidently nothing changes from either the conceptual or the operating viewpoint.

## Claims

1. Female fitting for various fluids, comprising an external housing (12), an internally-threaded end nut (1) fastened to said external housing (12) for connecting toward the utility, an internal housing (3) coaxial with said external housing (12), a stem (5) extending axially and integrally with said internal housing (3), a sealing bush (6) elastically urged in a position of sealing engagement with an enlarged extremity of said stem (5) so as to prevent the flow of the fluid until it is disengaged as a result of the coupling with a male fitting (52), and a spoked annular element (2) interposed between said internal housing (3) and a rearward portion of said stem (5) and having at least two flow ports (4) in the shape of circumferentially spaced annular sectors with narrow spokes (35) interposed therebetween, characterized in that said spoked element (2) is made of a piece distinct from said internal and external housings (3, 12) and releasably clamped between said end nut (1) and internal housing (3).

2. Female fitting according to claim 1, characterized in that said spoked element (2) has three flow ports (4) and an equal number of interposed spokes (35).

3. Female fitting according to claim 2, characterized in that said spoked element (2), said internal housing (3) and said end nut (1) are made in three distinct pieces that are separate one from the other.

## Patentansprüche

1. Aufnahmeanschlußstück für unterschiedliche Fluide, welches ein äußeres Gehäuse (12), eine mit Innengewinde versehene Stirnmutter (1), welche an dem äußeren Gehäuse (12) zur Verbindung mit einer Einrichtung befestigt ist, ein inneres Gehäuse (3), welches koaxial zu dem äußeren Gehäuse (12) angeordnet ist, einen Schaft (5), welcher axial verläuft und einstückig mit dem inneren Gehäuse (3) ausgebildet ist, eine Dichtungsbuchse (6), welche elastisch in einer Dichteingriffsposition gegen ein vergößertes Ende des Schafts (5) derart angedrückt wird, daß ein Strömen des Fluids verhindert wird, bis eine Abkopplung als Folge einer Verbindung mit einem Einsteckanschlußstück (52) erfolgt ist, und ein mit Speichen versehenes, ringförmiges Element (2) aufweist, welches zwischen dem inneren Gehäuse (3) und einem rückwärtigen Teil des Schafts (5) angeordnet ist, und wenigstens zwei Strömungsdurchgänge (4) in Form von in Umfangsrichtung beabstandeten, ringförmigen Sektoren mit schmalen, dazwischen angeordneten Speichen (35) hat, **dadurch gekennzeichnet,** daß das mit Speichen versehene Element (2) von einem Teil gebildet wird, welches von den inneres und äußeren Gehäusen (3, 12) gesondert und lösbar zwischen der Stirnmutter (1) und dem inneren Gehäuse (3) eingespannt ist.

2. Aufnahmeanschlußstück nach Anspruch 1, **dadurch gekennzeichnet,** daß das mit Speichen versehene Element (2) drei Strömungsdurchgänge (4) und eine gleiche Anzahl von dazwischen angeordneten Speichen (35) hat.

3. Aufnahmeanschlußstück nach Anspruch 2, **dadurch gekennzeichnet,** daß das mit Speichen versehene Element (2), das innere Gehäuse (3) und die Stirnmutter (1) als drei gesonderte Teile ausgebildet sind, die getrennt voneinander vorliegen.

## Revendications

1. Raccord femelle pour divers fluides, comprenant un corps extérieur (12), un écrou d'extrémité (10) fileté intérieurement, fixé audit corps extérieur (12) pour le raccordement à l'appareil, un corps intérieur (3) coaxial audit corps extérieur (12), une tige (5) s'étendant axialement et solidairement avec ledit corps intérieur (3), une douille d'étanchéité (6) rappelée élastiquement dans une position de coopération d''étanchéité avec une extrémité renflée de ladite tige (5) de manière à empêcher le fluide de s'écouler jusqu'au moment où elle est dégagée par suite de l'accouplement avec un raccord mâle (52), et un élément annulaire (2) à rayons interposé entre ledit corps intérieur (3) et une partie arrière de ladite tige (5), et ayant au moins deux orifices d'écoulement (4) présentant la forme de secteurs annulaires espacés circonférentiellement, avec d'étroits rayons (35) interposés entre ces orifices, caractérisé en ce que ledit élément à rayons (2) est fait d'une pièce distincte desdits corps intérieur et extérieur (3, 12) et verrouillé de façon séparable entre ledit écrou d'extrémité (1) et ledit corps intérieur (3).

2. Raccord femelle selon la revendication 1, caractérisé en ce que ledit élément à rayons (2) présente trois orifices d'écoulement (4) et un nombre égal de rayons (35) interposés.

3. Raccord femelle selon la revendication 1, caractérisé en ce que ledit élément à rayons (2) et ledit corps intérieur (3) et ledit écrou d'extrémité (1) sont réalisés en trois pièces distinctes qui sont séparées l'une de l'autre.
